# EUROPEAN PATENT SPECIFICATION

(11) **EP 3 267 084 B1**
(45) Date of publication and mention of the grant of the patent: **27.02.2019**
(21) Application number: 17178618.9
(22) Date of filing: 29.06.2017
(51) Int. Cl.: F16L 11/118, F16L 25/00, F16L 25/01

(54) **METHOD OF EARTHING CORRUGATED FLEXIBLE TUBES FOR DISSIPATING ELECTROSTATIC CHARGES GENERATED ON SUCH FLEXIBLE TUBES AND DEVICE FOR IMPLEMENTING THE METHOD**
VERFAHREN ZUR ERDUNG VON GEWELLTEN FLEXIBLEN ROHREN ZUR ABFÜHRUNG VON ELEKTROSTATISCHEN LADUNGEN, DIE AUF SOLCHEN FLEXIBLEN ROHREN ERZEUGT WERDEN, UND VORRICHTUNG ZUR DURCHFÜHRUNG DES VERFAHRENS
PROCÉDÉ DE MISE À LA TERRE DE TUBES FLEXIBLES ANNELÉS DE DISSIPATION DES CHARGES ÉLECTROSTATIQUES GÉNÉRÉES SUR DE TELS TUBES FLEXIBLES ET DISPOSITIF DE MISE EN OEUVRE DU PROCÉDÉ

(30) Priority: 05.07.2016 IT 201600069905
(43) Date of publication of application: 10.01.2018
(73) Proprietor: Merlett Tecnoplastic S.p.A., 21020 Daverio (VA) (IT)
(72) Inventor: TAMBORINI, Marco, 21020 DAVERIO - VARESE (IT)
(74) Representative: Rastelli, Franco

(56) References cited:
- EP-A2- 2 535 628
- WO-A1-2010/090278
- US-A1- 2009 050 227
- US-A1- 2013 269 818

## Description

### BACKGROUND OF INVENTION

The present invention relates, in its first aspect, to a method of earthing corrugated flexible tubes for dissipating electrostatic charges generated on such flexible tubes.

In its second aspect, the present invention relates to a device for implementing the method of the invention.

The invention starts from the Italian patent application for an industrial invention in the name of the applicant filed on 08.03.2016 with filing number 102016000024261.

The corrugated flexible tube described in this patent application was specifically designed for mounting on devices such as pellet conveyors, dehumidifiers, and so on.

In this assembly, the inner wall of the flexible tube comes into contact, at one of its ends, with metal parts of the machine such as flanges, lances, sleeves, filler necks and so on, while at the other end of the tube, the inner wall of the tube comes into contact with metal end parts of an apparatus for using and/or storing the material, for example in pellets, conveyed by the tube.

It is therefore necessary to ensure perfect earthing of the corrugated tube, to discharge to earth or ground the inevitable and harmful electrostatic charges generated and accumulated on the outer surface of the tube.

In the case where the tube, as is the one in the applicant's aforementioned patent application, is constituted by two layers and only the outer layer is antistatic, it is necessary to ensure the passage of electrostatic charges from the outer wall of the aforementioned metal parts, for example, sleeves and/or similar parts. Another flexible hose for dissipating electrostatic charges is shown in document US2009/0050227.

### SUMMARY OF INVENTION

Therefore, the aim of the present invention is to provide an extremely reliable and safe method for discharging to earth the aforementioned electrostatic charges prone to forming on the outer surface of a corrugated flexible tube of the above-mentioned type, forming the subject of the applicant's aforementioned patent application.

Within the scope of this aim, a main object of the present invention is to provide an earthing method that can however be used, without requiring any substantial modification to the steps of the method, for earthing completely antistatic or conductive tubes as well, i.e. not double-layered, especially tubes with a spiral plastic reinforcement, with similar absolute certainty of the passage of the static charges and/or currents to the aforementioned metal parts of the machines connected by the tube, and from these to ground.

A further object of the present invention is to provide an earthing method including a minimum number of operating steps, which can all be performed in a simple and rapid manner.

Yet another object of the present invention is to provide a device for implementing the method of the invention, this device including electrically conductive earthing means that are structurally extremely simple and reliable, and suitable for being applied to the ends of the tube without requiring complex dedicated tools.

A further object of the present invention is to provide a device of the indicated type, wherein the electrically conductive earthing means can be obtained by means of a simple operation, cutting for example, from a conductive spring element of substantially indefinite length, manufactured by simple production processes, extrusion for example, it being possible to obtain from this spring element a plurality of corresponding spring earthing elements of any size for adapting to the desired machine.

The last, but not least, object of the present invention is to provide an earthing device that, as well as ensuring perfect earthing of a double-layer corrugated flexible tube of the applicant's aforementioned patent application, can also earth completely antistatic or conductive corrugated tubes, i.e. not double-layered, in a similarly secure manner.

According to one aspect of the present invention, the previously mentioned aims and objects, as well as other objects, which shall be described in greater detail hereinafter, are achieved by an earthing method for the dissipation of electrostatic charges generated on corrugated flexible tubes having the characteristics of the enclosed method claims.

The aim and the aforementioned objects are also achieved by an earthing device for implementing the method of the invention having the characteristics of the device claims.

### BRIEF DESCRIPTION OF DRAWINGS

Further characteristics and advantages of the earthing method and device of the present invention shall become clearer in the following detailed description of a currently preferred embodiment shown in the accompanying drawings, in which:

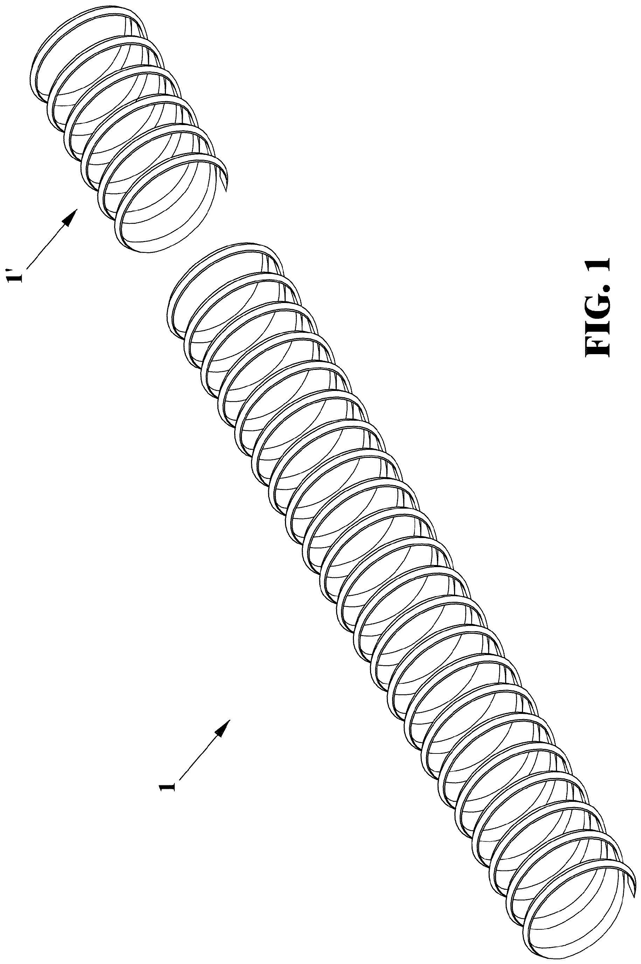

FIG. 1 is a perspective view of a conductive and elastic plastic element, substantially spring-like and of substantially indefinite length, from which a plurality of electrically conductive portions of predetermined length (only one of which is shown) can be separated, for example, by cutting;

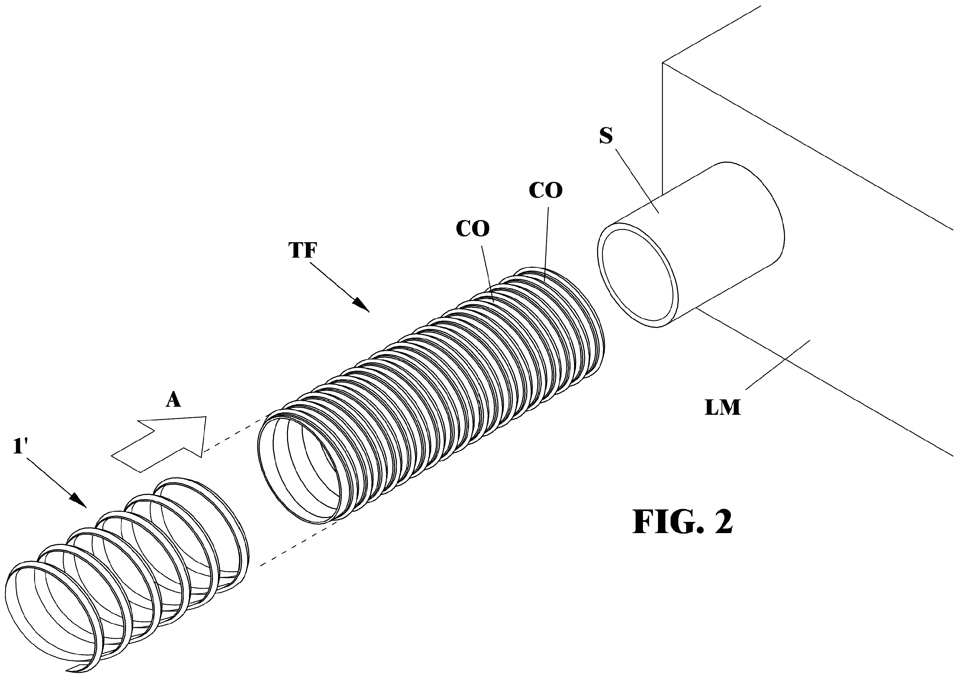

FIG. 2 is a further perspective view showing a corrugated flexible tube, about to be connected to a metal part of a machine, for example, a pellet conveyor and/or cooler and/or similar machine, and to which a portion of the spiral spring element that constitutes the core of the present invention is about to be applied;

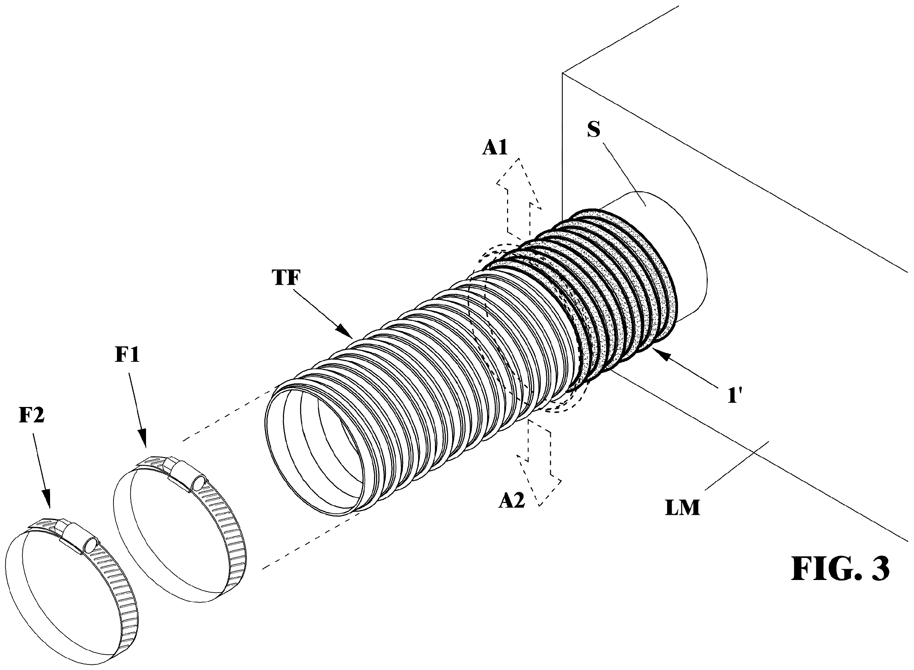

FIG. 3 is a further perspective view showing the corrugated tube applied to the aforementioned metal part of a machine, for example a metal sleeve, with the conductive spiral spring element already applied to the end of the tube and to the metal part of the machine, and with two metal clips about to be connected to the end of the tube to provide a "locked" secure earth connection;

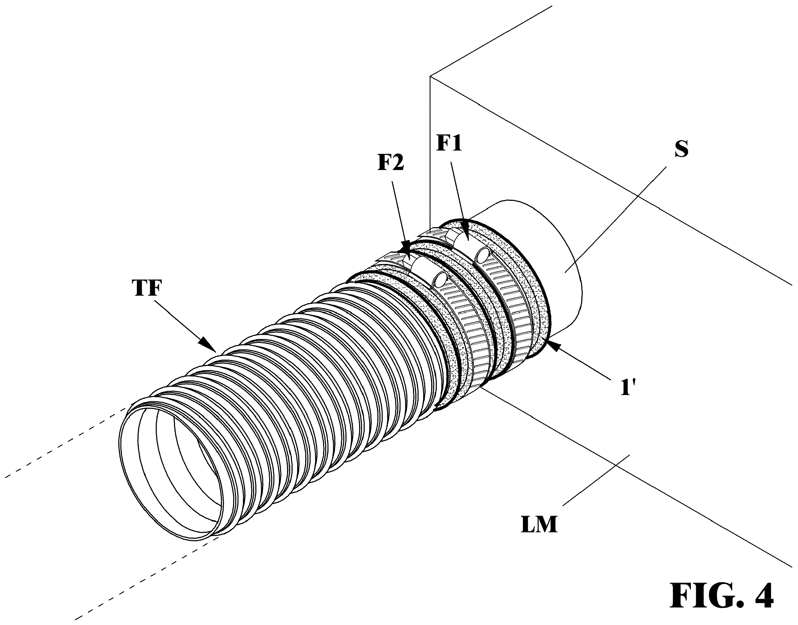

FIG. 4 is a further perspective view of the assembly in FIG. 3 with the metal locking clips applied to the spring element portion engaged partly on a metal sleeve portion of the machine and partly on a corresponding portion of the spring element integral with the first portion of the same spring element; and

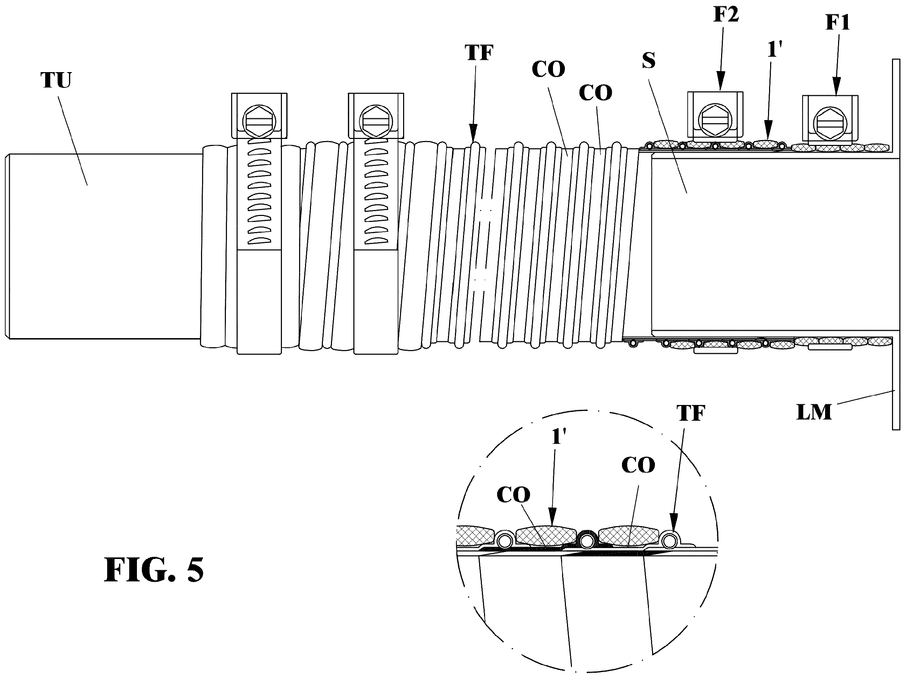

FIG. 5 shows a front view of the corrugated tube grounded by means of the method and the device of the present invention.

### DESCRIPTION OF PREFERRED EMBODIMENT

Before proceeding with a detailed description of the aforementioned drawings, the applicant would like to emphasize the fact that to solve the problem of reliably earthing the corrugated tube described in the applicant's aforementioned patent application, a spiral or spring of opportunely shaped very elastic plastic has been conceived, advantageously composed of an engineering plastic modified with additives and extenders adapted to make it suitable for discharging static currents.

Advantageously, this plastic spiral can be easily produced by means of a conventional extrusion process.

The spiral advantageously has, and which constitutes a distinctive aspect of the invention, a smaller diameter than the external diameter of the tube on which it will be installed, to ensure secure fastening on the corrugated outer surface of the tube, laying perfectly between the turns on the outer surface of the tube, Installation can be performed by simply "widening" the diameter of the spiral that, after the widening force is removed, will elastically "spring" back into the corrugations of the end portion of the corrugated tube and onto the corresponding metal portion of the machine to which the corrugated tube is connected.

In a similarly advantageous manner, only a part of the spiral, indicatively not less than three turns, is then installed on the end of the tube and made to continue for a distance from the end of the tube, indicatively not less than three turns, onto the outer metal walls of ends, such as flanges, of the machine, the metal walls of which are in turn connected to earth through competent installation by professional installers.

The installation must then be necessarily completed with locking devices on the end of the tube and on the sleeve of the machine, to ensure guaranteeable electrical continuity over time.

Now, with specific reference to the aforementioned drawings, and to FIG. 1 in particular, a perspective view is shown of the aforementioned extremely elastic and opportunely shaped conductive plastic spring spiral, which in FIG. 1 can be considered as having an indefinite length and is generally indicated by reference numeral 1.

FIG. 1 also shows a portion 1' of spiral, opportunely separated from the spiral 1 of indefinite length, for example by means of a simple cutting operation, and which is formed, as has been said and only indicatively by way of example, by six turns, of which three are for mounting on the part of the machine and three in the corrugations of the end of the flexible corrugated tube.

This flexible corrugated tube is shown, for example, in the perspective view in FIG. 2, where it is generally indicated by reference letters TF, the grooves of the corrugations CO extending along the entire length of the corrugated tube TF also being shown.

In FIG. 2, the tube is about to be mounted on the metal part, for example a sleeve S, on the machine side LM, while the spiral portion 1' is about to be mounted on the end of the corrugated tube TF.

In FIG. 3, the aforementioned spring spiral portion 1' is shown mounted on the end portion of the corrugated tube TF, installation being achieved thanks to the elastic properties of the spiral, by elastically opening the turns, in this case indicatively six, of the spiral 1', of which, as said, three will be mounted on the metal sleeve S of the machine and three in the corrugations CO of the flexible tube TF.

FIG. 3 also shows the method of mounting the spiral portion 1', i.e. by simply widening its elastic, spring-like structure and then releasing the widening force to let the turns of the spiral portion 1' settle perfectly into the corrugations CO of the flexible corrugated tube TF.

In FIG. 3, the widening force on the spiral portion 1' has been schematically indicated by arrows A1 and A2.

FIG. 3 also shows two adjustable metal clips F1 and F2 used as locking means to lock the six turns of the spiral, three (indicatively) on the metal sleeve machine side LM and three (indicatively) in the corrugations CO of the flexible corrugated tube TF.

In the perspective view in FIG. 4, the spiral portion 1' with three turns on the metal sleeve S and three turns in the corrugations CO of the flexible tube TF, is mounted in a completely locked condition by the two metal clips F1 and F2.

Finally, in FIG. 5, the flexible corrugated tube TF has been installed between the machine side LM and the end appliance side TU so as to dissipate any electrostatic charge prone to be generated on its surface to earth via the previously described method and means of the device.

In this regard, the applicant underlines that, from tests actually carried out, even if empirical and qualitative in nature, it has been found that there is electrical continuity between the two portions of spiral positioned at the end, and the resistance value reading is not less than that read when using the best elastic clips available up to now, always tightened from the outside.

The two spiral portions thus act as a kind of bridge, discharging all the electrostatic surface charges of the corrugated tube to the ground to which the aforementioned metal parts of the machines are connected, in a complete and extremely safe manner.

As has been said, since the internal diameter of the spiral 1' is much smaller than the external diameter of the tube TF, even if the latter has little corrugation, the two spiral portions (i.e. the six turns) tend not to slip off, even when handling the tube TF.

Nevertheless, the spiral is movable on the metal part inserted in its end, and therefore electrical contact is neither continuous nor guaranteed.

The two conventional metal clips F1 and F2 previously described are therefore absolutely necessary for locking the spiral on the metal connectors/caps in a way such as to "close" the spiral onto the metal part.

In the aforementioned tests, the applicant repeatedly tried slipping off each single end spiral on the tube in more or less the same way: in this case, substantially the same electrical resistance value was obtained, which means that the spiral still tends to close itself even after it has been used.

However, for reasons of absolute earthing safety, reutilization of the spiral is not advisable.

From the foregoing, it can be observed how the invention fully meets the intended aim and objects.

Although the earthing method and device of the invention have been described by making specific reference to a currently preferred embodiment, it should be borne in mind that the described embodiment is susceptible to numerous modifications and variants, all falling within the scope of the invention's concept.

For example, as it has already been mentioned, the installation of the spiral, which constitutes the core of the invention, can also be beneficial when using completely antistatic and conductive tubes, and even on tubes with a spiral plastic reinforcement, i.e. not only with the double-layer tube of the applicant's aforementioned Italian patent application, giving further safe passage of static currents from the tube to the metal parts of the machines used.

Furthermore, the spiral of the present invention can be mounted indifferently on tubes with a left-hand or right-hand spiral, using the same mounting method.

Thus, the invention should be considered as limited by the scope of the claims enclosed hereinafter, rather than by the preceding description.

## Claims

1. A method of connecting and earthing for the dissipation of electrostatic charges generated on a corrugated flexible tube (TF) or a spiral tube, in particular a tube with a spiral plastic reinforcement, of a predetermined internal and external diameter, having an outer corrugated or spiral surface, an inner wall, and a corrugated or spiral first end and second end, comprising the steps of removably connecting said first corrugated or spiral end of said corrugated or spiral flexible tube to a metal part of a machine, such as a pellet conveyor or dehumidifier, removably connecting said second corrugated or spiral end of said flexible tube to a metal end of an appliance, **characterized in that** said method also includes the steps of applying, between the corrugations or spirals of said first and second ends of said corrugated or spiral flexible tube and said metal part and said metal end, first and second elastic and electrically conductive plastic spirals (1) having a smaller diameter than said external diameter of said corrugated or spiral flexible tube to ensure the fastening and secure locking of said first and second spirals to the outer surface of said corrugated or spiral flexible tube and to ensure guaranteeable electrical continuity over time between said end portions of said tube and said metal parts and/or ends.

2. The method according to claim 1, **characterized in that** it also includes the step of extending each of said first and second spiral (1) on each end of said tube for at least a first number of turns on each of said first and second ends of said tube and for at least a second number of turns on said metal part and metal end.

3. The method according to claim 1, **characterized in that** it also includes the step of applying metal locking means to said first and second spiral to ensure guaranteeable electrical continuity over time.

4. The method according to claim 1, **characterized in that** it comprises a further step of making said first and second spirals (1) by cutting them from an extremely elastic plastic spiral of indefinite length, said spiral of indefinite length being obtained, by means of an extrusion process, in the form of a spring-shaped plastic spiral.

5. The method according to claim 4, **characterized in that** said spring-shaped plastic spiral (1) is made by extrusion of an engineering plastic modified with additives and extenders adapted to make said spring-shaped plastic spiral suitable for discharging static currents prone to accumulating on the outer surface of said corrugated or spiral flexible tube (TF) to said metal part and said metal end.

6. The method according to claim 3, **characterized in that** said step of applying locking means comprises applying metal clips (F1, F2) to said ends of said tube and to said metal parts.

7. The method according to claim 1, **characterized in that** it also includes the further step of applying said first and second spirals (1) to double-layer tubes as well as to completely antistatic or conductive tubes or to tubes with a spiral plastic reinforcement.

8. The method according to any of the preceding claims, **characterized in that** said metal part of said machine comprises a metal flange element, or a lance element, or a filler neck element, or a sleeve element and/or a similar element.

9. A device for implementing the method according to any of the preceding claims, **characterized in that** it comprises at least one corrugated or spiral flexible tube (TF) to be earthed, an extremely elastic and electrically conductive plastic spiral (1) having a diameter smaller than the external diameter of the tube, cutting means adapted to cut said spiral portions of spiral, each having a predetermined number of turns, and metal locking means (F1, F2) for locking said portions of spiral engaged in the corrugations or the spirals of the end portions of said tube and on said metal end parts to ensure guaranteeable electrical continuity over time between said end portions of said tube and said metal parts and/or ends.

10. The device according to claim 9, **characterized in that** said spiral (1) is constituted by a spring-like spiral structure extruded from a polymer material modified with additives and extenders adapted to make said spiral suitable for discharging static currents prone to forming on the outer surface of said corrugated or spiral flexible tube (TF) to earth.

## Patentansprüche

1. Verfahren zum Verbinden und Erden für das Ableiten elektrostatischer Ladungen, die an einem flexiblen Faltenschlauch (TF) oder einem Spiralschlauch, insbesondere einem Schlauch mit einer spiralförmigen Kunststoffverstärkung eines vorbestimmten Innen- und Außendurchmessers erzeugt werden, der eine äußere Falten- oder Spiraloberfläche, eine Innenwand und ein faltiges oder spiralförmiges erstes Ende und zweites Ende aufweist, umfassend die Schritte des lösbaren Verbindens des ersten falten- oder spiralförmigen Endes des falten- oder spiralförmigen flexiblen Schlauchs mit einem Metallteil einer Maschine, wie beispielsweise einem Pellets-Förderer oder - Entfeuchter, der das zweite falten- oder spiralförmige Ende des flexiblen Rohrs lösbar mit einem Metallende eines Geräts verbindet, **dadurch gekennzeichnet, dass** das Verfahren auch die Schritte des Aufbringens zwischen den Faltungen oder Spiralen des ersten und des zweiten Endes des falten- oder spiralförmigen flexiblen Schlauchs und dem Metallteil und dem Metallende von ersten und zweiten elastischen und elektrisch leitfähigen Kunststoffspiralen (1), die einen kleineren Durchmesser haben als der Außendurchmesser des falten- oder spiralförmigen flexiblen Schlauchs, um die Befestigung und sichere Verriegelung der ersten und zweiten Spiralen an der Außenfläche des falten- oder spiralförmigen flexiblen Schlauchs sicherzustellen und um eine garantierbare elektrische Kontinuität über die Zeit zwischen den Endabschnitten des Schlauchs und den Metallteile und/oder Metallenden sicherzustellen, umfasst.

2. Verfahren nach Anspruch 1, **dadurch gekennzeichnet, dass** es auch den Schritt umfasst, die erste und die zweite Spirale (1) an jedem Ende des Schlauchs um wenigstens eine erste Anzahl von Windungen an jedem der ersten und zweiten Enden des Schlauchs und um wenigstens eine zweite Anzahl von Windungen am Metallteil und am Metallende auszudehnen.

3. Verfahren nach Anspruch 1, **dadurch gekennzeichnet, dass** es auch den Schritt des Anbringens von Metallverriegelungsmitteln an der ersten und der zweiten Spirale umfasst, um eine garantierbare elektrische Kontinuität über die Zeit sicherzustellen.

4. Verfahren nach Anspruch 1, **dadurch gekennzeichnet, dass** es einen weiteren Schritt des Herstellens der ersten und der zweiten Spirale (1) durch Schneiden aus einer extrem elastischen Kunststoffspirale von unbestimmter Länge umfasst, wobei die Spirale von unbestimmter Länge mittels eines Extrusionsprozesses in Form einer federförmigen Kunststoffspirale erhalten wird.

5. Verfahren nach Anspruch 4, **dadurch gekennzeichnet, dass** die federförmige Kunststoffspirale (1) durch Extrusion eines technischen Kunststoffs hergestellt wird, der mit Zusätzen und Streckmitteln modifiziert ist, um die federförmige Kunststoffspirale zum Ableiten statischer Ströme, die dazu neigen, sich an der äußeren Oberfläche des falten- oder spiralförmigen flexiblen Schlauchs (TF) aufzubauen, an den Metallteil und das Metallende geeignet zu machen.

6. Verfahren nach Anspruch 3, **dadurch gekennzeichnet, dass** der Schritt des Anbringens von Verriegelungsmitteln das Anbringen von Metallklammern (F1, F2) an den Enden des Schlauchs und an den Metallteilen umfasst.

7. Verfahren nach Anspruch 1, **dadurch gekennzeichnet, dass** es auch den weiteren Schritt des Aufbringens der ersten und der zweiten Spirale (1) auf Doppelschichtschläuche sowie auf vollständig antistatische oder leitfähige Schläuche oder auf Schläuche mit einer spiralförmigen Kunststoffverstärkung umfasst.

8. Verfahren nach einem der vorhergehenden Ansprüche, **dadurch gekennzeichnet, dass** der Metallteil der Maschine ein Metallflanschelement oder ein Lanzenelement oder ein Einfüllstutzenelement oder ein Hülsenelement und/oder ein ähnliches Element umfasst.

9. Vorrichtung zur Durchführung des Verfahrens nach einem der vorhergehenden Ansprüche, **dadurch gekennzeichnet, dass** sie wenigstens einen zu erdenden falten- oder spiralförmigen Schlauch (TF), eine extrem elastische und elektrisch leitfähige Kunststoffspirale (1) mit einem Durchmesser, der kleiner als der Außendurchmesser des Rohrs ist, Schneidmittel, welche die spiralförmigen Abschnitte der Spirale mit jeweils einer vorbestimmten Anzahl von Windungen schneiden können, und Metallverriegelungsmittel (F1, F2) zum Verriegeln der Abschnitte eine Spirale, die in die Faltungen oder die Spiralen der Endabschnitte des Rohrs und an den Metallendteilen eingreift, aufweist, um eine garantierbare elektrische Kontinuität über die Zeit zwischen den Endabschnitten des Schlauchs und den Metallteilen und/oder Metallenden sicherzustellen.

10. Vorrichtung nach Anspruch 9, **dadurch gekennzeichnet, dass** die Spirale (1) aus einer federartigen Spiralstruktur besteht, die aus einem Polymermaterial extrudiert ist, das mit Zusätzen und Streckmitteln modifiziert ist, um die Spirale geeignet zu machen, statische Ströme, die sich an der äußeren Oberfläche des falten- oder spiralförmigen flexiblen Schlauchs (TF) aufbauen können, zur Erde abzuleiten.

## Revendications

1. Procédé de connexion et de mise à la terre pour la dissipation de charges électrostatiques générées sur un tube flexible ondulé (TF) ou un tube en spirale, en particulier un tube avec un renfort plastique en spirale, à diamètres interne et externe prédéterminés, ayant une surface externe ondulée ou en spirale, une paroi interne, et une première extrémité et une deuxième extrémité ondulées ou en spirale, comprenant les étapes de connexion amovible de ladite première extrémité ondulée ou en spirale dudit tube flexible ondulé ou en spirale à une partie métallique d'une machine, telle qu'un convoyeur ou un déshumidificateur de granulés, la connexion amovible de ladite deuxième extrémité ondulée ou en spirale dudit tube flexible à une extrémité métallique d'un appareil, **caractérisé en ce que** ledit procédé comprend également les étapes d'application, entre les ondulations ou les spirales desdites première et deuxième extrémités dudit tube flexible ondulé ou en spirale et ladite partie métallique et ladite extrémité métallique, des première et deuxième spirales en plastique élastique et électriquement conducteur (1) présentant un diamètre inférieur à celui dudit diamètre externe dudit tube flexible ondulé ou en spirale pour assurer la fixation et le verrouillage assuré desdites première et deuxième spirales sur la surface externe dudit tube flexible ondulé ou en spirale et pour assurer une continuité électrique garantissable dans le temps entre lesdites portions d'extrémité dudit tube et lesdites parties et/ou extrémités métalliques.

2. Procédé selon la revendication 1, **caractérisé en ce qu'**il comprend également l'étape d'extension de chacune desdites première et deuxième spirales (1) sur chaque extrémité dudit tube sur au moins un premier nombre de tours sur chacune desdites première et deuxième extrémités dudit tube et sur au moins un deuxième nombre de tours sur lesdites partie métallique et extrémité métallique.

3. Procédé selon la revendication 1, **caractérisé en ce qu'**il comprend également l'étape d'application d'un moyen de verrouillage métallique sur lesdites première et deuxième spirales pour assurer une continuité électrique garantissable dans le temps.

4. Procédé selon la revendication 1, **caractérisé en ce qu'**il comprend une étape additionnelle de fabrication desdites première et deuxième spirales (1) en les découpant à partir d'une spirale en plastique extrêmement élastique de longueur indéfinie, ladite spirale de longueur indéfinie étant obtenue à l'aide d'un processus d'extrusion sous forme d'une spirale en plastique en forme de ressort.

5. Procédé selon la revendication 4, **caractérisé en ce que** ladite spirale en plastique en forme de ressort (1) est fabriquée par extrusion d'un plastique technique modifié avec des additifs et des charges diluantes, adapté pour fabriquer ladite spirale en plastique en forme de ressort appropriée pour décharger des courants statiques enclins à s'accumuler sur la surface externe dudit tube flexible ondulé ou en spirale (TF) vers ladite partie métallique et ladite extrémité métallique.

6. Procédé selon la revendication 3, **caractérisé en ce que** ladite étape d'application d'un moyen de verrouillage comprend l'application d'agrafes métalliques (F1, F2) auxdites extrémités dudit tube et auxdites parties métalliques.

7. Procédé selon la revendication 1, **caractérisé en ce qu'**il comprend également l'étape additionnelle d'application desdites première et deuxième spirales (1) sur des tubes à double couche ainsi que sur des tubes complètement antistatiques ou conducteurs ou sur des tubes à renfort plastique en spirale.

8. Procédé selon l'une quelconque des revendications précédentes, **caractérisé en ce que** ladite partie métallique de ladite machine comprend un élément de bride métallique, un élément de lance, un élément de col d'entonnoir, un élément de manchon et/ou un élément similaire.

9. Dispositif de mise en oeuvre du procédé selon l'une quelconque des revendications précédentes, **caractérisé en ce qu'**il comprend au moins un tube flexible ondulé ou en spirale (TF) à mettre à la terre, une spirale en plastique extrêmement élastique et électriquement conducteur (1) présentant un diamètre inférieur au diamètre externe du tube, un moyen de découpe adapté pour découper lesdites portions de spirale, qui présentent chacune un nombre de tours prédéterminé, et un moyen de verrouillage métallique (F1, F2) pour verrouiller lesdites portions de spirale engagées dans les ondulations ou les spirales des portions d'extrémité dudit tube et sur lesdites parties d'extrémité métallique pour assurer une continuité électrique garantissable dans le temps entre lesdites portions d'extrémité dudit tube et lesdites parties et/ou extrémités métalliques.

10. Dispositif selon la revendication 9, **caractérisé en ce que** ladite spirale (1) est constituée par une structure en spirale de type ressort extrudée à partir d'un matériau polymère modifié avec des additifs et des charges diluantes, adapté pour fabriquer ladite spirale appropriée pour décharger des courants statiques enclins à se former sur la surface externe dudit tube flexible ondulé ou en spirale (TF) vers la terre.
